# EUROPEAN PATENT APPLICATION

(11) **EP 1 365 299 A1**
(43) Date of publication of application: **26.11.2003**
(21) Application number: 02253438.2
(22) Date of filing: 16.05.2002
(51) Int. Cl.: G05B 19/418

(54) **Method of determining a potential capacity overload**

(71) Applicant: LUCAS AUTOMOTIVE GMBH, 56070 KOBLENZ (DE); ASC Enterprise, Stafford ST16 2EZ (GB)
(72) Inventor: Klein, Thomas, 56070 Koblenz (DE); Buchet, Christophe, 56070 Koblenz (DE); Olaoye, Olaide, Stafford ST16 2EZ (GB)
(74) Representative: von Hellfeld, Axel, Dr. Dipl.-Phys.

(57) **Abstract**

A method of determining by a customer a potential capacity overload on a supplier's production line (40) is disclosed, said production line (40) being composed of a plurality of machines (42,44,46,48) at least a number of which are employed serially to process a manufacturing product. The method uses information regarding the supplier's production line (40) and comprising at least the following steps: (a) designating at least one machine of said plurality of machines (42,44,46,48) as a bottleneck machine, the processing capacity of which limits the manufacturing capacity of the supplier's production line (40) regarding the product to be manufactured, (b) determining a complexity index for the product to be manufactured by applying different criteria.

## Description

### Background of the Invention

The present invention relates to a method of determining by a customer a potential capacity overload on a supplier's production line which is composed of a plurality of machines employed serially to process a manufacturing product. In particular the present invention relates to a method of determining by a customer a potential capacity overload on a supplier's production line when a production target fluctuates substantially over time.

### State of the Art

The manufacture of an industrial product generally requires a number of machinery manufacture and processing steps being taken one after the other. This particularly applies to complex products such as vehicles, information and telecommunication technology products, chemical and pharmaceutical products. Customarily these production steps do not take place under one roof. Often manufacturers of such industrial products are customers for sub-contracted parts, which are manufactured on production lines of external product suppliers and then further processed on production lines of the customer.

In order to gear the capacity of a supplier's production line to that of a customer's production line for which the contract parts are designated, the customer and supplier agree in advance, for example once a year, for each contract part a production rate, that is a quantity, which is required to be manufactured within a pre-given period of time on the production line of the supplier. In this way it is guaranteed that the production line of the customer is supplied with a sufficient number of contract parts. Moreover, it is also guaranteed that the production line of the supplier is of adequate capacity and at the same time is utilized to work effectively.

In many industries the demand for certain products fluctuates and is difficult to forecast. In the motor industry for example the demand for a new vehicle can only be very roughly estimated. Accordingly, the actual demand for contract parts can fluctuate wildly and diverge from the order quantity, which has been agreed with the supplier beforehand.

To most effectively integrate the production steps that take place on the supplier's production line with the production steps that take place on the customer's production line, it is important for the customer to recognise sufficiently early whether the actual demand presented by his production line will exceed the capacity of the supplier's production line or not. The customer must expect the demand presented by his production line to exceed the capacity of the supplier's production line when the demand presented by his production line exceeds the production rate agreed in advance. In such a case measures designed to adapt the supply capacity are introduced. Such measures are for example an introduction of an additional working shift to free reserve capacity, or the provision of, possibly at a second supplier's, a second production line which runs in addition to the first production line of the first supplier's.

Frequently however, the actual capacity of a production line of the supplier's is at odds with the agreed production rate. As the production line for the supply parts is established at the supplier's site, the customer lacks detailed information e.g. about the suppliers exact work schedule and his obligations to other customers, from which the load and possible reserve capacity of the production line for supplied parts could be determined. Also, it is often not desired for a supplier to submit such information to a customer, as for the supplier this might compromise his competitive position and for the customer such information is difficult to analyse.

### Problem Addressed by the Invention

An object of the present invention is to provide a method allowing the customer to recognise sufficiently early a potential capacity inadequacy on the production line of a supplier.

### Inventive Solution

To fulfil this object, the invention teaches a method of determining by a customer a potential capacity overload on a supplier's production line, said production line being composed of a plurality of machines at least a number of which are employed serially to process a manufacturing product, said method using information regarding the supplier's production line, the method comprising at least the following steps:
a) designating at least one machine of said plurality of machines as a bottleneck machine, the processing capacity of which limits the manufacturing capacity of the supplier's production line regarding the product to be manufactured,
b) determining a complexity index for the product to be manufactured by applying at least the following criteria:
   b1) Is the bottleneck machine employed for processing only said product to be manufactured?
   b2) Is the bottleneck machine employed for processing several products for the production line of the customer?
   b3) Is the bottleneck machine employed for processing only the product to be manufactured and at least a single further product which is not destined for the production line of the customer?
   b4) Is the bottleneck machine employed for processing several products for the production line of the customer and at least a single product which is not destined for the production line of the customer?
c) determining that for a given production rate, on the basis of the complexity index determined in accordance with step (b), for the product to be manufactured, a capacity overload of the supplier's production line does not take place,
d) determining and, if necessary, adapting the complexity index at pre-defined times and
e) determining a potential capacity overload of the supplier's production line for a production target on the basis of the complexity index determined in accordance with step (d) and on the basis of the relationship between said production target and said production rate of step (c) .

### Construction and Development of the Inventive Solution

In one preferred embodiment of the invention, all machines are employed serially. In another preferred embodiment of the invention, at least one machine of the plurality of machines is employed in parallel to another machine of the plurality of machines. In an example for such an embodiment, two identical machines with an inherently low production rate compared to other machines in the production line are provided to work in parallel. The pair of machines is arranged in series with at least one other machine to form the production line. As a result, the production rate of the two parallel machines combined is better adapted to the production rates of the other machines in the production line.

The designation of at least one machine as a bottleneck machine is preferably undertaken by the supplier. Preferably, one bottleneck machine is the machine that limits the production rate of the supplier's production line. In a preferred embodiment of the invention at least one bottleneck machine is an injection casting machine, a sand blasting machine, a machine that performs a quality control or a machine which functions with a cutting method, e.g. turning, milling or boring.

In a preferred embodiment of the invention the questions b1) to b4) are answered by the supplier and the answers are communicated to the customer. In conclusion the customer determines the complexity index based on the answers to the questions b1) to b4). In a further preferred embodiment of the inventive method, the complexity index is determined by the supplier and forwarded to the customer.

In one preferred embodiment of the invention, if the answer to question b1 is "yes", the complexity index is I; if the answer to question b2 is "yes" the complexity index is II; if the answer to question b3 is "yes" the complexity index is III; if the answer to question b4 is "yes" the complexity index is IV. In an alternative preferred embodiment of the invention, if the answer to question b1 is "yes", the complexity index is I; if the answer to question b2 is "yes" or the answer to question b3 is "yes" the complexity index is II; if the answer to question b4 is "yes" the complexity index is IV.

In a preferred embodiment of the invention, in addition to the criteria b1 to b4 the criterium of whether the bottleneck machine is employed only for processing the product to be manufactured and several products which are not destined for the production line of the customer is applied to determining the complexity index. In another preferred embodiment of the invention, in addition to the criteria b1 to b4 the criterium of whether the bottleneck machine is employed for processing several products for the production line of the customer and several products which are not destined for the production of the customer is applied to determining the complexity index.

In a preferred embodiment of the invention a potential capacity overload is determined in accordance with a pre-defined scheme with the following parameters:
- production rate at a specified date T, which is to be examined for a potential capacity overload,
- complexity index for the date T,
- production target for the date T.

The production rate is preferably a rate that has previously been agreed between the customer and the supplier. Alternatively it is a mean value of the production rate that has been handled by the supplier in a time interval in the past, for example one year. Further alternatively the production rate is the rate of which the customer knows from experience that it can be handled by the supplier without problems.

The potential capacity overload is preferably determined as a risk factor (in terms of a probability) in accordance with step e) such that, relative to the actual or a forecast production target (which may vary in time) and said production rate (in accordance with step c), a change of the complexity index to a higher value, e.g. from I to II, from I to III, from I to IV, from II to III, from II to IV, or from III to IV, results in a higher risk factor with regard to a potential capacity overload. The present invention is concerned primarily with the determination of that probability of a capacity overload. It is then up to the customer to take appropriate steps, e.g. to approach the supplier or another supplier.

In one preferred embodiment of the invention the complexity index is re-determined at regular time intervals, e.g. one or more of the following: daily, weekly, monthly, quarterly. In another further preferred embodiment of the invention the complexity index is re-determined when the supplier's production line undergoes modification which could lead to changes in the answers to at least one of the criteria which are taken into account to determine the complexity index. In a particularly preferred embodiment of the invention the complexity index is re-calculated at regular time intervals and when the supplier's productions line undergoes modification which could lead to changes in the answers to at least one of the criteria taken into account to determine the complexity index.

To test for a potential capacity overload, in a preferred embodiment of the invention a maximum capacity load (Cₘₐₓ) is determined for the supplier's production line. The potential capacity overload is established when a capacity load determined on the basis of the pre-defined production target reaches the maximum capacity load (Cₘₐₓ) within a permitted pre-defined admissible tolerance deviation. The pre-defined admissible tolerance deviation is preferably a function of the complexity index.

In a preferred embodiment of the invention the pre-defined admissible tolerance deviation is 8% of the agreed production rate if the complexity index is I; if the complexity index is II the pre-defined admissible tolerance deviation is 10% of the agreed production rate; if the complexity index is III the pre-defined admissible tolerance deviation is 12% of the agreed production rate; if the complexity index is IV the pre-defined admissible tolerance deviation is 15% of the agreed production rate. Accordingly, the maximum capacity load Cₘₐₓ is 108%, 110%, 112% and 115% of the agreed production rate, respectively.

In a further preferred embodiment of the invention, the scheme of establishing an admissible tolerance band takes into account actual production rates and targets that the supplier reached or failed to reach at one or several dates in the past and the complexity indexes at the these dates. The present invention also includes such embodiments which for defining admissible tolerance band considers other parameters in addition to the ones listed above, e.g. whether the supplier has been shown to be dependable in the past, or whether the supplied part is a particularly critical part.

In a particularly preferred embodiment of the invention, the admissible tolerance deviation is a function of the type of supplier. For this purpose, the suppliers can for example be categorized by size, location or degree of automation. It can for example be assumed that a highly automated supplier is less flexible, and therefore the admissible tolerance deviation is smaller for such a supplier than for a supplier with a lower degree of automation.

In one preferred embodiment of the invention testing for a potential capacity overload takes place at regular time intervals, for example one or more of the following: daily, weekly, monthly, quarterly. In another preferred embodiment of the invention, testing for a potential capacity overload takes place whenever the production target changes, for example as a result of changes in the projected demand for the end product. In a particularly preferred embodiment of the invention, testing for a potential capacity overload takes place at regular time intervals and when the production target changes.

Particularly preferred are production lines which are production lines to manufacture the supply parts for the automobile industry, the information and communications industry, and the chemical and pharmaceutical industry.

All above-mentioned embodiments can be selectively combined.

The present invention has the advantage of a fast information exchange between customer and supplier, as only a few data need to be communicated.

Furthermore, it can be advantageous in so much as it can be implemented regardless of the specific supplier's manufacturing methods or the specific type of components being manufactured. In this way the same method can be implemented to determine for the customer a potential capacity overload on production lines of several or all suppliers.

Finally, the present invention can be advantageous in so much as the supplier does not have to divulge any competition compromising information as only the abstract complexity index or answers to questions to determine the complexity index have to be communicated.

### Brief description of the drawings

- Fig. 1: is a flow diagram illustrating the steps of the method of determining a potential capacity overload according to the present invention;
- Fig. 2a and 2b: illustrate in an example the relationship between an agreed production rate, production targets and a predefined admissible tolerance deviation with the maximum capacity load;
- Fig. 3: illustrates in an example a supplier's production line.

### Detailed description of an embodiment

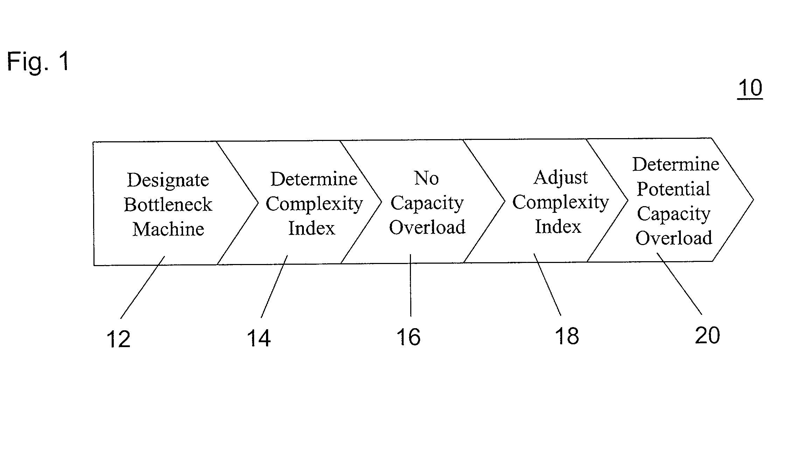

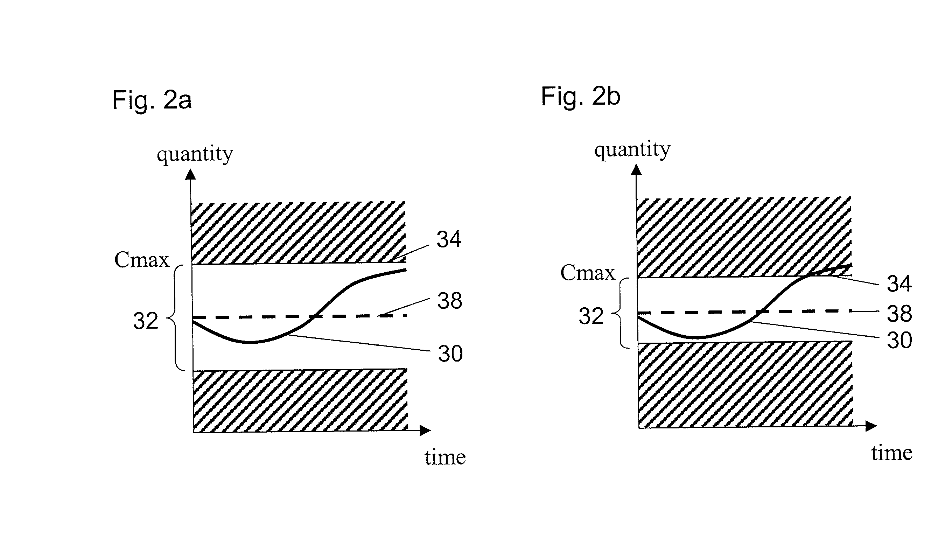

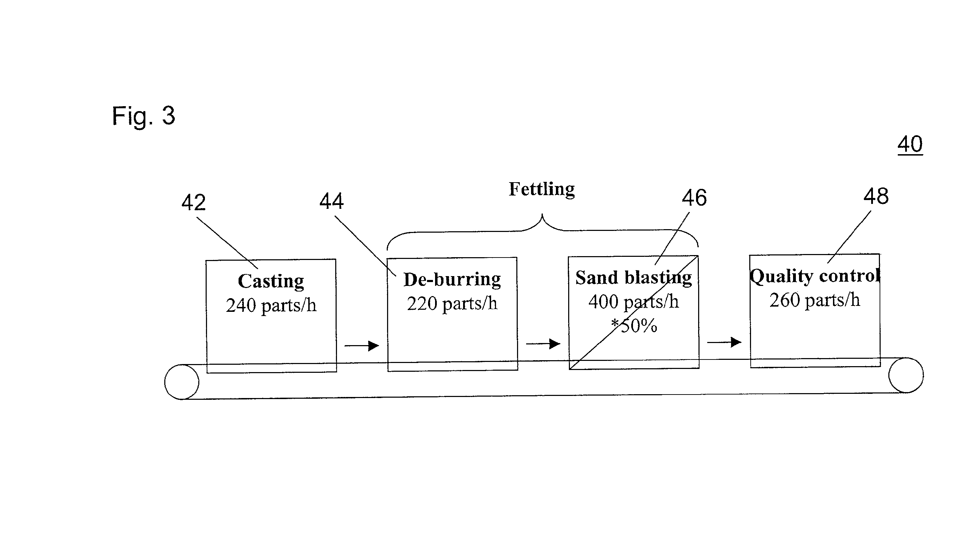

In the following the individual steps 12, 14, 16, 18 and 20 (see fig. 1) of the method 10 of determining a potential capacity overload are discussed in detail by means of figures 1 to 3. It is assumed that a customer and a supplier have agreed on a production rate 30 (shown in figures 2a and 2b) for a particular type of contract parts beforehand. The supplier's production line 40 (see fig. 3) is fully dedicated to the production of said contract parts.

In a first step 12, the supplier identifies a bottleneck machine in the production line 40 that manufactures said contract parts. As an example, fig. 3 shows a production line with casting, fettling and quality control steps. The production line comprises four machines namely a casting machine 42 followed by a de-burring 44 and a sand blasting machine 46 for fettling and a quality control setup 48. To identify the bottleneck machines, the supplier takes into accounts the gross production rate, which, for example in the casting machine (42) is a function of the cycle time, the number of tools and the number of cavities per tool. He also takes into account the efficiencies and rejection rates of the machines (42, 44, 46, 48). Further, the fraction of the machine time that is actually dedicated to the production line 40 is considered. From that, the supplier arrives at a net production rate dedicated to the production line 40 for each machine (42, 44, 46, 48) of the production line 40. Machines 42, 44 and 48 have production rates of 240, 220 and 260 parts per hour fully dedicated to the production line 40.

Machine 46 has a net production rate of 400 parts per hour. However, since it is shared with another production line (not shown) only 50% of its net production is actually available to production line 40. Thus, its production rate dedicated to the production line 40 is 200 parts per hour. It is thus the sand blasting machine 46 that limits the capacity of the production line 40. The sand blasting machine 46 is therefore identified as the bottleneck machine by the supplier.

In a next step 14 of the method 10, based on the characteristics of the bottleneck machine 46 the complexity index is determined by the customer. For this, the supplier communicates to the customer that the bottleneck machine is employed for processing only the product to be manufactured for the production line of the customer and at least a single further product which is not destined for the production line of the customer. Thus, the customer assigns a complexity index of II to the contract parts manufactured on the production line 40 of the supplier. In the following step 16 of the method 10, the customer determines that for the agreed production rate there is no capacity overload on the suppliers production line 40.

If changes take place in the supplier's production line 40, this might require the complexity index to be adjusted. The sand blasting machine 46 might, for example, no longer be needed for another production line and is therefore now fully dedicated to the production line 40. In this case, the sand blasting machine 46 is no longer the bottleneck machine. Rather, the de-burring machine 44 now constitutes the bottleneck. As the de-burring machine is fully dedicated to the production line 40, in step 18 of the method 10, the supplier communicates to the customer that the bottleneck machine is now applied for processing only the product to be manufactured for the customer and the customer adjust the complexity index to I. It is now described with reference to figures 2a and 2b how in step 20, a potential capacity overload is determined.

Around the agreed order quantity 30, an admissible tolerance band 32 is provided. The upper boundary 34 of the band 32 is the maximum capacity load Cₘₐₓ for the supplier's production line 40 for the contract parts. The width of the band 32 is a function of the complexity index. If the complexity index is II, as in fig. 2a, the admissible tolerance deviation is 10% of the agreed production rate above and thus the maximum capacity load Cₘₐₓ is 110% of the agreed production rate. If, on the other hand, the complexity index is I, the admissible tolerance deviation is only 8%, as shown in fig. 2b. If now, as in fig. 2b, the production targets 38 reach the maximum capacity load C_{max,} a potential capacity overload is determined by the customer.

Based on this result and the particular situation, the customer can now react in a number of ways. If for example the supplier has already offered the option of freeing additional capacity if required, the customer can inform the supplier that he intends to take advantage of this option. Alternatively, the customer might shift some of the volume to another supplier that supplies the same parts but has a higher maximum capacity load Cₘₐₓ due to a higher complexity index. In conclusion, the present method enables the customer and the supplier to early identify potential capacity overloads and find the solution that is in line with the customer's demand and the supplier's capability.

## Claims

1. Method of determining by a customer a potential capacity overload on a supplier's production line (40), said production line (40) being composed of a plurality of machines (42, 44, 46,48) at least a number of which are employed serially to process a manufacturing product, said method using information regarding the supplier's production line (40), the method comprising at least the following steps:
a) designating at least one machine of said plurality of machines (42, 44, 46, 48) as a bottleneck machine, the processing capacity of which limits the manufacturing capacity of the supplier's production line (40) regarding the product to be manufactured,
b) determining a complexity index for the product to be manufactured by applying at least the following criteria:
b1) Is the bottleneck machine employed for processing only said product to be manufactured?
b2) Is the bottleneck machine employed for processing several products for the production line of the customer?
b3) Is the bottleneck machine employed for processing only the product to be manufactured and at least a single further product which is not destined for the production line of the customer?
b4) Is the bottleneck machine employed for processing several products for the production line of the customer and at least a single product which is not destined for the production line of the customer?
c) determining that for a given production rate, on the basis of the complexity index determined in accordance with step (b), for the product to be manufactured, a capacity overload of the supplier's production line (40) does not take place,
d) determining and, if necessary, adapting the complexity index at pre-defined times and
e) determining a potential capacity overload of the supplier's production line (40) for a production target on the basis of the complexity index determined in accordance with step (d) and on the basis of the relationship between said production target and said production rate of step (c) .

2. Method according to claim 1, **characterized in that** a maximum capacity load (Cₘₐₓ) is determined for the supplier's production line (40) and that the potential capacity overload is established when the capacity load determined on the basis of the pre-defined production targets reaches a maximum capacity load (Cₘₐₓ) within a permitted pre-defined admissible tolerance deviation.

3. The method according to claim 2, **characterized in that** the pre-defined admissible tolerance deviation is a function of the complexity index.
